# EUROPÄISCHE PATENTSCHRIFT

(11) **EP 2 565 495 B1**
(45) Veröffentlichungstag und Bekanntmachung des Hinweises auf die Patenterteilung: **19.03.2014**
(21) Anmeldenummer: 12176247.0
(22) Anmeldetag: 13.07.2012
(51) Int. Cl.: F16H 3/66, F16H 57/08

(54) **Getriebevorrichtung mit Stützbolzen für ein Fahrzeug**
Dispositif d'engrenage avec colonnette de soutien pour un véhicule
Drive device with support bolts for a vehicle

(30) Priorität: 31.08.2011 DE 102011081882
(43) Veröffentlichungstag der Anmeldung: 06.03.2013
(73) Patentinhaber: Schaeffler Technologies GmbH & Co. KG, 91074 Herzogenaurach (DE)
(72) Erfinder: Smetana, Tomas, 91074 Herzogenaurach (DE); Jurjanz, Ramon, 91058 Erlangen (DE)

(56) Entgegenhaltungen:
- DE-A1-102005 029 537
- DE-B4-112005 001 867
- JP-A- 2008 089 051
- US-A- 3 527 121

## Beschreibung

Die Erfindung betrifft eine Getriebevorrichtung für ein Fahrzeug mit einem ersten Stirnradgetriebeabschnitt, wobei der erste Stirnradgetriebeabschnitt eine Mehrzahl von ersten Planeten eines ersten Planetensatzes aufweist, welche umlaufend um eine Hauptdrehachse der Getriebevorrichtung angeordnet sind, mit einem zweiten Stirnradgetriebeabschnitt, wobei der zweite Stirnradgetriebeabschnitt eine Mehrzahl von zweiten Planeten eines zweiten Planetensatzes aufweist, welche umlaufend um die Hauptdrehachse der Getriebevorrichtung angeordnet sind, mit einer Mehrzahl von Doppelplanetenbolzen, wobei sich die Doppelplanetenbolzen von einem ersten Seitenabschnitt zu einem zweiten Seitenabschnitt erstrecken und wobei die Doppelplanetenbolzen jeweils einen Planeten des ersten Planetensatzes und einen Planeten des zweiten Planetensatzes tragen, und einem dritten Planetensatz mit dritten Planeten, welche ebenfalls umlaufend um die Hauptdrehachse der Getriebevorrichtung angeordnet sind, und mit einer Mehrzahl von Stützbolzen, wobei die Stützbolzen jeweils einen Planeten des dritten Planetensatzes tragen.

Getriebevorrichtungen in Fahrzeugen sind in vielfältigen Ausführungsformen bekannt. Derartige Getriebevorrichtungen werden beispielsweise in Antriebssträngen von Fahrzeugen verwendet, um das Antriebsdrehmoment zu untersetzen, zu übersetzen, zu verteilen oder zusammen zu führen. Eine besonders bauraumsparende Ausführung von Getriebevorrichtungen sind Stirnradgetriebevorrichtungen, welche eine Mehrzahl von umlaufend verzahnten Stirnrädern aufweisen.

Die Druckschrift DE 11 2005 001867 B4 die den gattungsgemäßen Stand der Technik bildet, betrifft eine Planetengetriebeeinheit mit zwei Planetentrieben. Die Planetentriebe sind über ein gemeinsames Planetenrad miteinander gekoppelt, welches sich über beide Planetentriebe erstreckt.

Auch die Druckschrift DE 10 2005 006649 A1 behandelt eine Planetenradträgeranordnung, wobei die Planetenradträgeranordnung ebenfalls ein in dieser Druckschrift als langes Ritzel bezeichnetes gemeinsames Planetenrad aufweist. Ein weiteres Beispiel für eine Planetenträgeranordnung ist in der Druckschrift JP2010077985A offenbart.

Die Druckschrift US 3,527,121 offenbart ein Planetenrad-Übertragungsgetriebe mit mehreren, axial benachbart angeordneten Getriebeabschnitten, welche als Planeten Stirnräder aufweisen. In einer Ausführungsform dieser Druckschrift, wie diese besonders gut in der Figur 1 zu erkennen ist, wird ein axial verlaufender, durchgehender Planetenbolzen als Träger für ein Doppelplanetenrad verwendet, wobei zwei Planetenradabschnitte in axialer Richtung benachbart zueinander auf dem gemeinsamen Planetenbolzen angeordnet sind. Weitere Planeten in diesem Planetengetriebe weisen Bolzen auf, die sich in axialer Richtung betrachtet, jeweils nur über einen einzelnen Getriebeabschnitt erstrecken.

### Gebiet der Erfindung

Der Erfindung liegt die Aufgabe zugrunde, eine Getriebevorrichtung für ein Fahrzeug vorzuschlagen, welches kompakt und zugleich robust aufgebaut ist.

Diese Aufgabe wird durch eine Getriebevorrichtung mit den Merkmalen des Anspruchs 1 gelöst. Bevorzugte oder vorteilhafte Ausführungsformen der Erfindung ergeben sich aus den Unteransprüchen, der nachfolgenden Beschreibung sowie den beigefügten Figuren.

Im Rahmen der Erfindung wird eine Getriebevorrichtung offenbart, welche für ein Fahrzeug geeignet und/oder ausgebildet ist. Insbesondere dient die Getriebevorrichtung zur Übersetzung, Untersetzung, Zusammenführung und/oder Verteilung eines Antriebsdrehmoments in dem Fahrzeug. Somit kann die Getriebevorrichtung in allgemeinster Ausführung der Erfindung als ein Differential, insbesondere Längs- oder Querdifferential, Hybridgetriebe, Automatikgetriebe etc. ausgebildet sein.

Bei einer besonders bevorzugten Ausführungsform der Erfindung ist die Getriebevorrichtung als eine elektromotorische Getriebevorrichtung - auch elektrische Achse genannt - ausgebildet und umfasst einen Elektromotor, welcher ein Antriebsdrehmoment, vorzugsweise das Hauptantriebsdrehmoment, für das Fahrzeug bereitstellt. Besonders bevorzugt ist der Elektromotor koaxial und/oder konzentrisch zu einer Hauptdrehachse der Getriebevorrichtung angeordnet. In einer möglichen Ausführungsform verlaufen Abtriebswellen koaxial und konzentrisch zu der Hauptdrehachse und innerhalb des Elektromotors und/oder der Getriebevorrichtung.

Die Getriebevorrichtung ist als ein Stirnradgetriebe ausgebildet und umfasst eine Mehrzahl von umlaufend verzahnten Stirnrädern. Die Achsen der Stirnräder sind parallel zu der Hauptdrehachse ausgerichtet.

Die Getriebevorrichtung umfasst einen ersten Stirnradgetriebeabschnitt, welcher eine Mehrzahl von ersten Planeten eines ersten Planetensatzes aufweist. Die Planeten sind auf einem gemeinsamen Teilkreis umlaufend um die Hauptdrehachse bevorzugt regelmäßig verteilt angeordnet.

In axialer Richtung benachbart, vorzugsweise unmittelbar angrenzend, zu dem ersten Stirnradgetriebeabschnitt ist ein zweiter Stirnradgetriebeabschnitt angeordnet, welcher einen zweiten Planetensatz mit einer Mehrzahl von zweiten Planeten aufweist. Die zweiten Planeten sind ebenfalls umlaufend um die Hauptdrehachse bevorzugt regelmäßig verteilt auf einem Teilkreis angeordnet. Der Teilkreis der ersten Planeten ist der gleiche Teilkreis wie der Teilkreis der zweiten Planeten.

Seitlich sind die beiden Stirnradgetriebeabschnitte durch einen ersten Seitenabschnitt und einen zweiten Seitenabschnitt begrenzt. Die beiden benachbart zueinander angeordneten Stirnradgetriebeabschnitte sind zwischen den zwei Seitenabschnitten angeordnet und von diesen in axialer Richtung klammerartig umgriffen. In axialer Richtung betrachtet ist zunächst der erste Seitenabschnitt, dann der erste Stirnradgetriebeabschnitt, dann der zweite Stirnradgetriebeabschnitt und schließlich der zweite Seitenabschnitt angeordnet.

Die Getriebevorrichtung weist eine Mehrzahl von Doppelplanetenbolzen auf, welche sich jeweils von dem ersten Seitenabschnitt zu dem zweiten Seitenabschnitt erstrecken. Bevorzugt sind die Doppelplanetenbolzen jeweils mit dem ersten Seitenabschnitt und dem zweiten Seitenabschnitt fest, zum Beispiel stoffschlüssig oder formschlüssig, verbunden. Jeder der Doppelplanetenbolzen trägt einen Planeten des ersten Planetensatzes und einen Planeten des zweiten Planetenabsatzes, so dass der Doppelplanetenbolzen eine Doppelplanetendrehachse definiert. Bevorzugt sind die ersten und/oder die zweiten Planeten auf dem Doppelplanetenbolzen jeweils über Lagerungen, vorzugsweise Wälzlager, drehbar gelagert. Der Radius des Teilkreises ist vorzugsweise als der Abstand zwischen der Hauptdrehachse und der Doppelplanetendrehachse definiert.

Die Getriebevorrichtung weist einen dritten Planetensatz mit dritten Planeten auf, welche ebenfalls umlaufend um die Hauptdrehachse der Getriebevorrichtung auf einem Teilkreis regelmäßig verteilt angeordnet sind. Die dritten Planeten werden von einer Mehrzahl von Stützbolzen getragen und sind optional auf diesen über Lagerungen gelagert. Somit bilden die Stützbolzen eine Planetendrehachse für die dritten Planeten. Die Anzahl der Planenten pro Planentensatz beträgt z.B. drei, vier oder mehr Planeten.

Im Rahmen der Erfindung wird vorgeschlagen, dass sich die Stützbolzen von dem ersten Seitenabschnitt zu dem zweiten Seitenabschnitt erstrecken. Besonders bevorzugt sind die Stützbolzen jeweils an dem ersten Seitenabschnitt und an dem zweiten Seitenabschnitt festgelegt.

Es ist dabei eine Überlegung der Erfindung, dass - bei entsprechender Auslegung der Getriebevorrichtung und insbesondere kollisionsfreier Anordnung der Planeten - es ermöglicht wird, dass die Stützbolzen sich nicht nur axial betrachtet, über nur einen der Stirnradgetriebeabschnitte erstrecken - wie dies aus dem Stand der Technik bekannt ist -, sondern sich über beide Stirnradgetriebeabschnitte erstreckt. Diese in axialer Richtung verlängerten Stützbolzen sind zwar nicht notwendig, um weitere Planeten aufzunehmen, wie die Doppelplanetenbolzen, jedoch können diese Stützbolzen eine Stützfunktion einnehmen und die mechanische Stabilität der Getriebevorrichtung im Bereich der Stirnradgetriebeabschnitte verbessern. Insbesondere wird die mechanische Stabilität der Verbindung der beiden Seitenabschnitte miteinander deutlich erhöht. Die erhöhte Stabilität wird jedoch nicht durch Verstärkungen erkauft, die zu einer Vergrößerung des Bauraumes führen, sondern durch eine vorzugsweise bauraumneutrale Verlängerung der Stützbolzen.

Nachdem die Stützbolzen wie auch die Doppelplanetenbolzen sich zwischen den Seitenabschnitten erstrecken und diese verbinden und die Stützbolzen somit in der Länge an die Doppelplanetenbolzen angeglichen sind, ist es bevorzugt, dass die Doppelplanetenbolzen und die Stützbolzen baugleich ausgeführt sind. Diese bevorzugte Ausführungsform führt dazu, dass Stützbolzen und Doppelplanetenbolzen als Gleichteile ausgebildet sind. Die Erhöhung der Gleichteile in der Getriebevorrichtung erniedrigt die Komplexität der Getriebevorrichtung, verringert die Anzahl unterschiedlicher Einzelteile und erleichtert die Montage.

Bei einer besonders bevorzugten Ausführungsform der Erfindung ist mindestens einer der Seitenabschnitte als Abschnitt eines Umformteils, insbesondere als Abschnitt eines kalt umgeformten Teils ausgebildet.

Derartige Umformteile sind konturierte Blechformteile und insbesondere in der Massenproduktion sehr kostengünstig und zugleich toleranzarm herstellbar. Durch den Einsatz der verlängerten Stützbolzen wird erreicht, dass die mechanische Stabilität der Getriebevorrichtung im Bereich der Stirnradgetriebeabschnitte bei der Verwendung von Umformteilen auch im Vergleich mit Vollmaterialteilen oder Gussteilen für die Seitenabschnitte ausreichend hoch ist.

Besonders bevorzugt ist das Umformteil als ein Topfteil ausgebildet, welches zugleich ein Gehäuse für einen oder mehrere der Planetensätze bildet.

Erfindungsgemäß ist zwischen dem ersten und dem zweiten Stirnradgetriebeabschnitt eine Zwischenplatte angeordnet, welche gemeinsam mit den Seitenabschnitten, den Doppelplanetenbolzen und den Stützbolzen einen Planetenträger bildet. Die Zwischenplatte ist besonders bevorzugt als ein insbesondere kalt umgeformtes Blechformteil ausgebildet. Diese Ausführungsform setzt den Ansatz der Getriebevorrichtung, insbesondere kalt umgeformte Blechformteile zu verwenden, konsequent fort, wobei die mechanische Stabilität des Planetenträgers auch durch die Verwendung der verlängerten Stützbolzen sichergestellt ist.

Bei einer bevorzugten Weiterbildung der Erfindung weisen die Doppelplanetenbolzen und/oder die Stützbolzen eine Anlageschulter auf, an der die Zwischenplatte in axialer Richtung formschlüssig anliegt. In dieser Ausgestaltung erfüllen die Doppelplanetenbolzen bzw. die Stützbolzen eine weitere Funktion, wobei neben der Trägerfunktion für die Planeten und der Stützfunktion für die Seitenabschnitte eine Stützfunktion für die mittige Zwischenplatte umgesetzt wird. Eine derartige Anlageschulter ist bei der Herstellung der Doppelplanetenbolzen bzw. Stützbolzen einfach und kostengünstig und zugleich mit hoher Präzision einzubringen.

Besonders bevorzugt ist, dass der Planetenträger mit den Stirnradgetriebeabschnitten als eine selbsthaltende Baugruppe ausgebildet ist. In dieser Ausgestaltung kann die Baugruppe besonders einfach montiert, gewartet oder gegebenenfalls gewechselt werden.

Bei einer besonders bevorzugten Ausführungsform der Erfindung weisen die Doppelplanetenbolzen und/oder die Stützbolzen axial verlaufende Schmiermittelführungen auf. Damit wird durch die Doppelplanetenbolzen bzw. Stützbolzen eine weitere Funktion, nämlich eine Schmiermittelführungsfunktion, umgesetzt. Die Schmiermittelführungen können zur Schmierung von Lagerungen der Planeten, insbesondere der Planeten des ersten, des zweiten und/oder des dritten Planetensatzes und/oder zur axialen Durchführung von Schmiermittel durch die Getriebevorrichtung im Bereich der Stirnradgetriebeabschnitte ausgebildet sein. Beispielsweise sind die Doppelplanetenbolzen und/oder die Stützbolzen mit einer koaxialen Durchgangsbohrung versehen, um die Durchführung zu ermöglichen. Alternativ oder ergänzend sind zur Versorgung der Lagerungen der Planeten mit Schmiermittel radial verlaufenden Kanäle eingebracht.

Insbesondere kann die axiale Durchführung von Schmiermittel durch die Getriebevorrichtung im Bereich der Stirnradgetriebeabschnitte durch die Schmiermittelführungen in den Stützbolzen verbessert werden, da diese ergänzende Kanäle zu den Schmiermittelführungen in den Doppelplanetenbolzen darstellen können. Es ist jedoch auch möglich, dass die Schmiermittelführungen ausschließlich in den Stützbolzen eingebracht sind.

Bei einer besonders bevorzugten Ausführungsform der Erfindung sind die Schmiermittelführungen in den Stützbolzen so ausgebildet, dass das Schmiermittel, ausgehend von einem Schmiermitteleingang durch einen der Stirnradgetriebeabschnitte hindurch zu den dritten Planeten in dem anderen Stirnradgetriebeabschnitt geführt wird. Es ist somit möglich, die Schmiermittelzuführung auf der axialen Seite der Getriebevorrichtung anzuordnen, die dem Stirnradgetriebeabschnitt mit dem dritten Planetensatz abgewandt ist.

Die Schmiermittelzuführung kann beispielsweise durch eine aufgesetzte Schmiermittelfangschale umgesetzt werden. Die Schmiermittelfangschale weist in einer bevorzugten Ausführungsform der Erfindung axial verlaufende Stutzen auf, welche strömungstechnisch mit den Schmiermittelführungen der Doppelplanetenbolzen und/oder Stützbolzen gekoppelt sind. Die Schmiermittelfangschale weist in manchen Ausführungsformen einen umlaufenden Rand auf, in dem aufgrund von Zentrifugalkräften Schmiermittel gefangen und hineingedrückt wird, wobei der Rand so ausgebildet ist, dass das Schmiermittel von dem Rand in die Stutzen und damit in die Schmiermittelführung weitergeführt wird.

Bei einer besonders bevorzugten Ausführungsform der Erfindung ist der Stirnradgetriebeabschnitt mit den dritten Planeten als ein Differential oder als ein Ravigneaux-Satz ausgebildet. In diesen Ausgestaltungen kämmen die Planeten des dritten Planetensatzes mit den Planeten des ersten oder des zweiten Planetensatzes in dem Stirnradgetriebeabschnitt.

Weitere Merkmale, Vorteile und Wirkungen der Erfindung ergeben sich aus der nachfolgenden Beschreibung bevorzugter Ausführungsbeispiele der Erfindung sowie der beigefügten Figuren. Dabei zeigen:
- Figur 1: einen schematischen Längsschnitt durch eine elektromotorische Getriebevorrichtung als ein Ausführungsbeispiel der Erfindung;
- Figur 2: eine Baugruppe der Getriebevorrichtung in Detailansicht des schematischen Längsschnitts der Figur 1 in anderer zeichnerischen Darstellung;
- Figur 3: eine schematische dreidimensionale Darstellung der Baugruppe der Figur 2;
- Figur 4: eine schematische Darstellung des Planetenträgers der Baugruppe der Figuren 2 und 3 in Abwicklung.

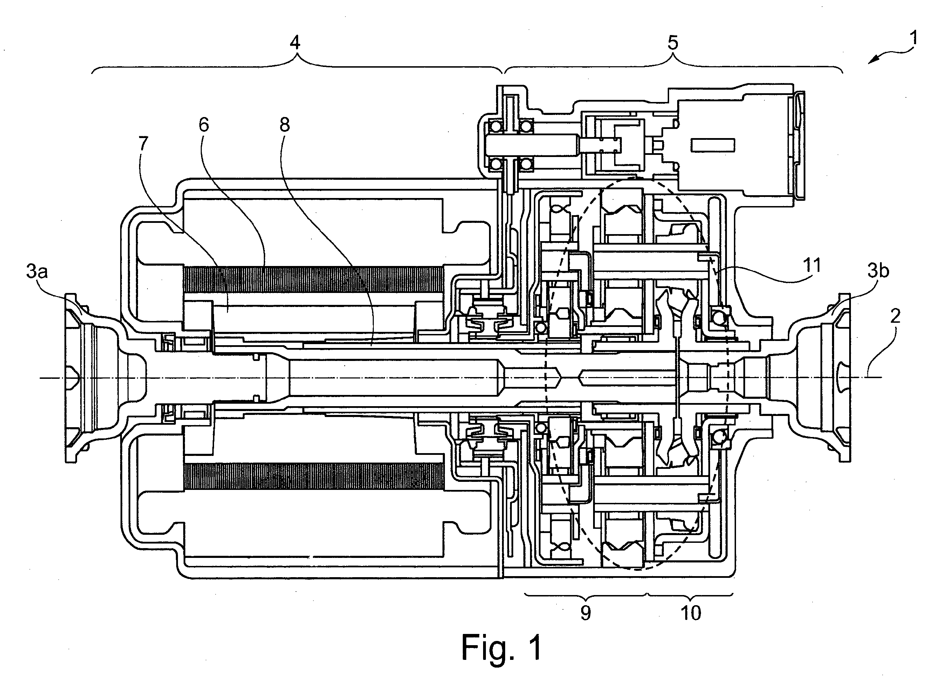

Die Figur 1 zeigt eine Getriebevorrichtung 1 in einem schematischen Längsschnitt durch die Hauptdrehachse 2 der Getriebevorrichtung 1 als ein Ausführungsbeispiel der Erfindung.

Die Getriebevorrichtung 1 ist als eine elektrische Achse oder elektromotorische Getriebevorrichtung mit zwei Abtriebswellen 3 a, b ausgebildet, welche sich um die Hauptdrehachse 2 drehen. Die Getriebevorrichtung 1 umfasst einen Motorbereich 4 und einen Getriebebereich 5. In dem Motorbereich 4 ist ein Elektromotor 6 angeordnet, wobei dessen Rotor 7 über eine Hohlwelle 8 mit dem Getriebebereich 5 gekoppelt ist, so dass ein Antriebsdrehmoment aus dem Elektromotor 6 über die Hohlwelle 8 in den Getriebebereich 5 übertragen wird. Innerhalb der Hohlwelle 8 ist die Abtriebswelle 3 a koaxial und/oder konzentrisch zu dem Elektromotor 6 angeordnet.

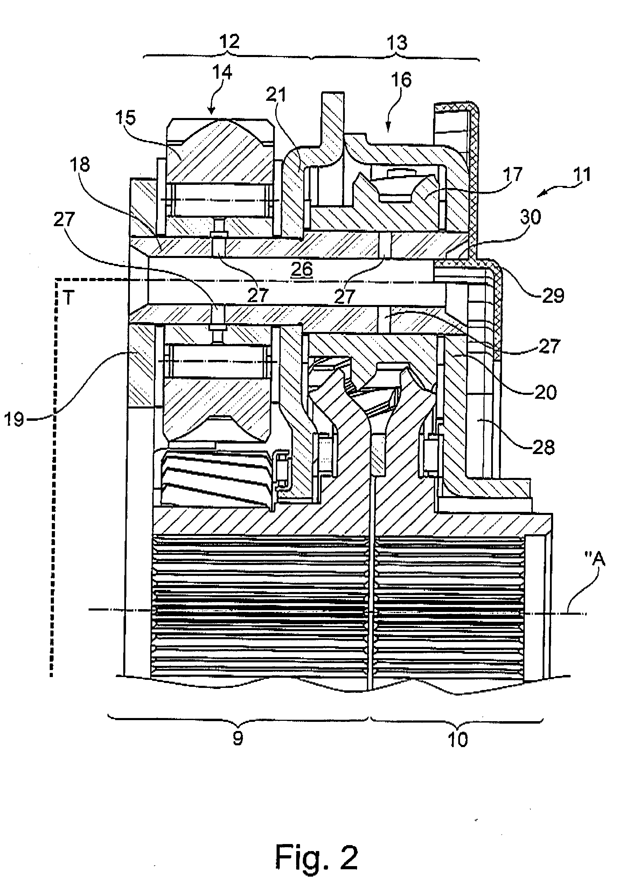

In dem Getriebebereich 5 sind ein Übersetzungsabschnitt 9 und ein Differentialabschnitt 10 angeordnet, um das Antriebsdrehmoment des Elektromotors 6 zu übersetzen bzw. zu untersetzen und auf die beiden Abtriebswellen 3 a, b zu verteilen. Ein Teil des Übersetzungsabschnitts 9 - auch Übertragungsabschnitte zu nennen - und der Differentialabschnitt 10 sind in einer gemeinsamen Baugruppe 11 integriert, welche in der Figur 2 in einem schematischen Längsschnitt in Vergrößerung gezeigt ist. Die Darstellung der Figur 2 zeigt die Baugruppe 11 in einer Längsschnittdarstellung, wobei die untere Hälfte der Baugruppe 11 zeichnerisch unterdrückt ist.

Die Baugruppe 11 umfasst einen ersten Stirnradgetriebeabschnitt 12 und in axialer Richtung der Hauptdrehachse 2 benachbart dazu einen zweiten Stirnradgetriebeabschnitt 13. Der erste Stirnradgetriebeabschnitt 12 ist als ein Teil des Übersetzungsabschnitts 9 ausgebildet. Er umfasst einen ersten Planetensatz 14 mit ersten Planeten 15, welche in einem Teilkreis T um die Hauptdrehachse 2 in Umlaufrichtung verteilt angeordnet sind.

Der zweite Stirnradgetriebeabschnitt 13 bildet den Differentialabschnitt 10 und weist einen zweiten Planetensatz 16 mit zweiten Planeten 17 auf, die ebenfalls in Umlaufrichtung auf dem Teilkreis T angeordnet sind.

Jeweils ein Planet 15 des ersten Planetensatzes 14 und ein zweiter Planet 17 des zweiten Planetenplanetensatzes 16 sitzen auf einem Doppelplanetenbolzen 18. Die Baugruppe 11 ist seitlich oder in axialer Richtung durch zwei Seitenabschnitte 19, 20 begrenzt, in denen der bzw. die Doppelplanetenbolzen 18 jeweils endseitig befestigt ist bzw. sind. Zwischen dem ersten und zweiten Stirnradgetriebeabschnitt 12, 13 ist eine Zwischenplatte 21 angeordnet, welche die beiden Stirnradgetriebeabschnitte 12, 13 voneinander trennt. Sowohl die beiden Seitenabschnitte 19, 20 als auch die Zwischenplatte 21 sind als Blechteile bzw. konturierte Blechformteile ausgebildet. Seitenabschnitte 19, 20 und Zwischenplatte 21 können somit durch eine günstige Kaltumformung hergestellt werden.

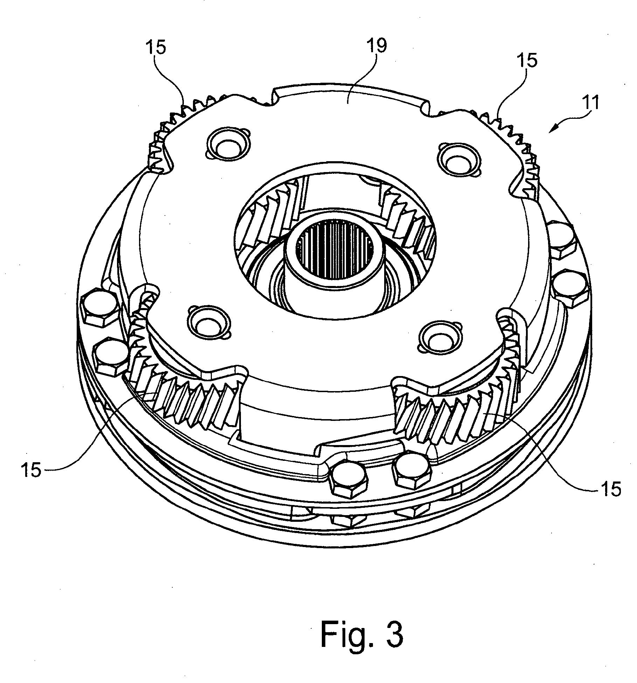

Die Figur 3 zeigt die Baugruppe 11 in einer schematischen dreidimensionalen Darstellung, wobei zu erkennen ist, dass der erste Seitenabschnitt 19 eine Topfform aufweist und die vier ersten Planeten 15 aufnimmt. In dem ersten Seitenabschnitt 19 sind Aussparungen eingebracht, durch die die ersten Planeten 15 herausragen, so dass diese mit einem Hohlrad des Übersetzungsabschnitts 9 kämmen können.

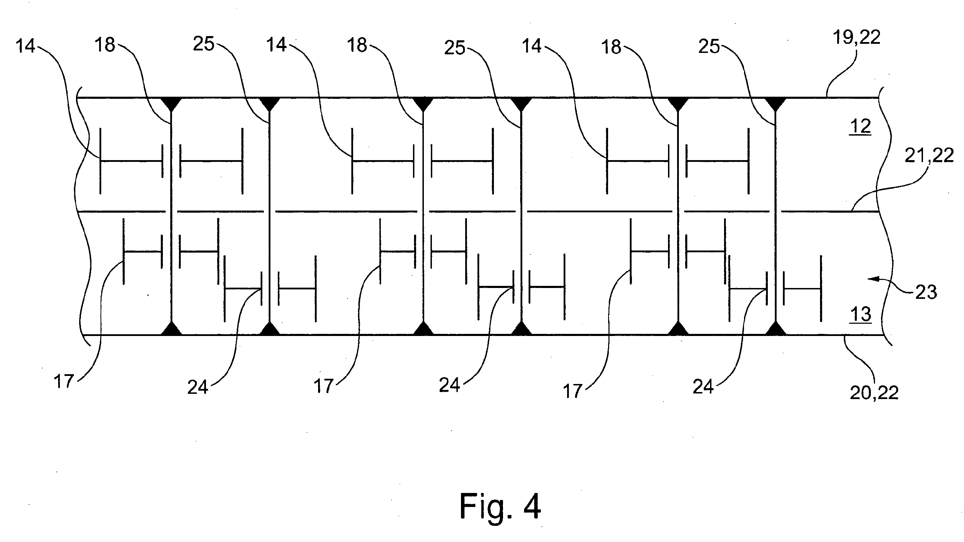

Die Figur 4 zeigt in einer schematisierten Darstellung die Abwicklung der Baugruppe 11, wobei zu erkennen ist, dass erster Seitenabschnitt 19, Zwischenplatte 21 und zweiter Seitenabschnitt 20 gemeinsam mit den Doppelplanetenbolzen 18 einen Planetenträger 22 bilden.

Aus dieser Darstellung ist jedoch auch zu entnehmen, dass in dem zweiten Stirnradgetriebeabschnitt 13 ein dritter Planetensatz 23 mit dritten Planeten 24 angeordnet ist. Die dritten Planeten 24 des dritten Planetensatzes 23 kämmen jeweils mit einem zweiten Planeten 17 des zweiten Planetensatzes 16. Die dritten Planeten 24 des dritten Planetensatzes 23 sitzen jeweils auf einem Stützbolzen 25, welcher sich von dem ersten Seitenabschnitt 19 durch die Zwischenplatte 21 bis zum zweiten Seitenabschnitt 20 erstreckt. Der Bereich des Stützbolzens 25 in dem ersten Stirnradgetriebeabschnitt 12 ist unbesetzt.

Sowohl die Doppelplanetenbolzen 18 als auch die Stützbolzen 25 sind an den Seitenabschnitten 19, 20 fest angebunden, zum Beispiel verschweißt, und bilden damit eine mechanische Abstützung zwischen den Seitenabschnitten 19, 20. Dadurch, dass die Stützbolzen 25 sich über die gesamte axiale Breite der Baugruppe 11 erstrecken, ist der Planetenträger 22 mechanisch sehr stabil ausgebildet und kann daher hohe Lasten aufnehmen.

Die Doppelplanetenbolzen 18 definieren eine Doppelplanetendrehachse und die Stützbolzen 25 eine Stützbolzendrehachse jeweils für die aufgesetzten Planeten 15, 17, 24, wobei die Doppelplanetendrehachse, Stützbolzendrehachse und Hauptdrehachse 2 parallel ausgerichtet sind.

Doppelplanentenbolzen 18 und Stützbolzen 25 weisen beide eine in axialer Richtung verlaufende Schmiermittelführung 26 auf, die beispielhaft für die Doppelplanetenbolzen 18 in der Figur 2 gezeigt ist. Die Schmiermittelführung 26 in den Stützbolzen 25 sind baugleich ausgeführt. Die Schmiermittelführung 26 erstreckt sich durch die gesamte Baugruppe 11 hindurch, so dass Schmiermittel durch die beiden Stirngetriebeabschnitte 12, 13 in axialer Richtung hindurchgeführt werden kann. Dadurch, dass sowohl die Doppelplanetenbolzen 18 als auch die Stützbolzen 25 eine Schmiermittelführung 25 aufweisen wird der Strömungswiderstand durch die Baugruppe 11 hindurch gering gehalten, so dass eine effektive Schmiermittelversorgung sichergestellt ist.

Zudem weisen die Doppelplanetenbolzen 18 Kanäle 27 auf, die von de Schmiermittelführungen 26 in radialer Richtung abzweigen und Lagerungen der Planeten 15, 17 bzw. 24 mit Schmiermittel versorgen. Auf den zweiten Seitenabschnitt 20 ist eine Schmierstofffangschale 28 aufgesetzt, welche einen umlaufenden, nach radial innen geöffneten Rand 29 aufweist, in dem im Betrieb der Baugruppe 11 aufgrund von Zentrifugalkräften Schmiermittel gefangen wird und über Stutzen 30 in die Schmiermittelführungen 26 geleitet wird. Durch die Schmiermittelführungen 26 ist es ausreichend, dass das Schmiermittel nur von einer axialen Seite in die Baugruppe 11 eingeführt wird, wobei aber beide Stirnradgetriebeabschnitte 12, 13 ausreichend mit Schmiermittel versorgt werden.

### Bezugszeichenliste

- 1: Getriebevorrichtung
- 2: Hauptdrehachse
- 3a, b: Abtriebswellen
- 4: Motorbereich
- 5: Getriebebereich
- 6: Elektromotor
- 7: Rotor
- 8: Hohlwelle
- 9: Übersetzungsabschnitt
- 10: Differentialabschnitt
- 11: Baugruppe
- 12: erster Stirnradgetriebeabschnitt
- 13: zweiter Stirnradgetriebeabschnitt
- 14: erster Planetensatz
- 15: erste Planeten
- 16: zweiter Planetensatz
- 17: zweite Planeten
- 18: Doppelplanetenbolzen
- 19: Seitenabschnitt
- 20: Seitenabschnitt
- 21: Zwischenplatte
- 22: Planetenträger
- 23: dritter Planetensatz
- 24: dritte Planeten
- 25: Stützbolzen
- 26: Schmiermittelführung
- 27: Kanäle
- 28: Schmierstofffangschale
- 29: Rand
- 30: Stutzen

## Patentansprüche

1. Getriebevorrichtung (1) für ein Fahrzeug
mit einem ersten Stirnradgetriebeabschnitt (12), wobei der erste Stirnradgetriebeabschnitt (12) eine Mehrzahl von ersten Planeten (15) eines ersten Planetensatzes (14) aufweist, welche umlaufend um eine Hauptdrehachse (2) der Getriebevorrichtung (1) angeordnet sind,
mit einem zweiten Stirnradgetriebeabschnitt (13), wobei der zweite Stirnradgetriebeabschnitt (13) eine Mehrzahl von zweiten Planeten (17) eines zweiten Planetensatzes (16) aufweist, welche umlaufend um die Hauptdrehachse (2) der Getriebevorrichtung (1) angeordnet sind,
mit einer Mehrzahl von Doppelplanetenbolzen (18), wobei sich die Doppelplanetenbolzen (18) von einem ersten Seitenabschnitt (19) zu einem zweiten Seitenabschnitt (20) erstrecken und wobei die Doppelplanetenbolzen (18) jeweils einen ersten Planeten (15) des ersten Planetensatzes (14) und einen zweiten Planeten (17) des zweiten Planetensatzes (16) tragen,
mit einem dritten Planetensatz (23) mit dritten Planeten (24), welche ebenfalls umlaufend um die Hauptdrehachse (2) der Getriebevorrichtung angeordnet sind, und
mit einer Mehrzahl von Stützbolzen (25), wobei die Stützbolzen (25) jeweils einen dritten Planeten (24) des dritten Planetensatzes (23) tragen,
wobei sich die Stützbolzen (25) von dem ersten Seitenabschnitt (19) zu dem zweiten Seitenabschnitt (20) erstrecken,
mit einer Zwischenplatte (21), die zwischen dem ersten und dem zweiten Stirnradgetriebeabschnitt (12,13) angeordnet ist, und die gemeinsam mit den Seitenabschnitten (19,20), den Doppelplanetenbolzen (18) und den Stützbolzen (25) einen Planetenträger (22) bildet,
**dadurch gekennzeichnet, dass**
die Zwischenplatte (21) die beiden Stirnradgetriebeabschnitte (12,13) voneinander trennt.

2. Getriebevorrichtung (1) nach Anspruch 1, **dadurch gekennzeichnet, dass** mindestens einer der Seitenabschnitte (19, 20) als Abschnitt eines Umformteils ausgebildet ist.

3. Getriebevorrichtung (1) nach Anspruch 2, **dadurch gekennzeichnet, dass** das Umformteil als ein Topfteil ausgebildet ist.

4. Getriebevorrichtung (1) nach einem der vorhergehenden Ansprüche, **dadurch gekennzeichnet, dass** die Doppelplanentenbolzen (18) und/oder die Stützbolzen (25) eine Anlageschulter aufweisen, an der die Zwischenplatte (21) in axialer Richtung formschlüssig anliegt.

5. Getriebevorrichtung (1) nach einem der vorhergehenden Ansprüche, **dadurch gekennzeichnet, dass** der Planetenträger (22) mit den Stirnradgetriebeabschnitten (12, 13) als eine selbsthaltende Baugruppe ausgebildet ist,

6. Getriebevorrichtung (1) nach einem der vorhergehenden Ansprüche, **dadurch gekennzeichnet, dass** die Doppelplanetenbolzen (18) und/oder die Stützbolzen (25) axial verlaufende Schmiermittelführungen (26) aufweisen.

7. Getriebevorrichtung (1) nach Anspruch 6, **dadurch gekennzeichnet, dass** die Schmiermittelführungen (26) zur Schmierung von Lagerungen der Planeten (15, 17, 24) und/oder zur axialen Durchführung von Schmiermittel ausgebildet ist,

8. Getriebevorrichtung (1) nach einem der Ansprüche 6 oder 7, **dadurch gekennzeichnet, dass** die Schmiermittelführung (26) durch einen der Stirnradgetriebeabschnitte (12, 13) hindurch zu den dritten Planeten (24) in dem anderen Stirnradgetriebeabschnitt (13, 12) führt.

9. Getriebevorrichtung (1) nach einem der vorhergehenden Ansprüche, **dadurch gekennzeichnet, dass** der Stirnradgetriebeabschnitt (13) mit den dritten Planeten (24) als ein Differential oder als ein Ravigneaux-Satz ausgebildet ist.

## Claims

1. Transmission device (1) for a vehicle,
with a first spur-gear portion (12), the first spur-gear portion (12) having a plurality of first planets (15) of a first planet set (14), which are arranged epicyclically about a main axis of rotation (2) of the transmission device (1),
with a second spur-gear portion (13), the second spur-gear portion (13) having a plurality of second planets (17) of a second planet set (16), which are arranged epicyclically about the main axis of rotation (2) of the transmission device (1),
with a plurality of double planet bolts (18), the double planet bolts (18) extending from a first side portion (19) to a second side portion (20), and the double planet bolts (18) carrying in each case a first planet (15) of the first planet set (14) and a second planet (17) of the second planet set (16),
with a third planet set (23) having third planets (24) which are likewise arranged epicyclically about the main axis of rotation (2) of the transmission device, and
with a plurality of supporting bolts (25), the supporting bolts (25) carrying in each case a third planet (24) of the third planet set (23),
the supporting bolts (25) extending from the first side portion (19) to the second side portion (20),
with an intermediate plate (21) which is arranged between the first and the second spur-gear portion (12, 13) and which, together with the side portions (19, 20), the double planet bolts (18) and the supporting bolts (25), forms a planet carrier (22),
**characterized in that**
the intermediate plate (21) separates the two spur-gear portions (12, 13) from one another.

2. Transmission device (1) according to Claim 1, **characterized in that** at least one of the side portions (19, 20) is designed as a portion of a formed part.

3. Transmission device (1) according to Claim 2, **characterized in that** the formed part is designed as a pot part.

4. Transmission device (1) according to one of the preceding claims, **characterized in that** the double planet bolts (18) and/or the supporting bolts (25) have a bearing shoulder, against which the intermediate plate (21) bears positively in the axial direction.

5. Transmission device (1) according to one of the preceding claims, **characterized in that** the planet carrier (22) is designed, together with the spur-gear portions (12, 13), as a self-locking subassembly.

6. Transmission device (1) according to one of the preceding claims, **characterized in that** the double planet bolts (18) and/or the supporting bolts (25) have lubricant guides (26) running axially.

7. Transmission device (1) according to Claim 6, **characterized in that** the lubricant guides (26) are designed for the lubrication of mountings of the planets (15, 17, 24) and/or for the axial leadthrough of lubricant.

8. Transmission device (1) according to either one of Claims 6 and 7, **characterized in that** the lubricant guide (26) leads through one of the spur-gear portions (12, 13) to the third planets (24) in the other spur-gear portion (13, 12).

9. Transmission device (1) according to one of the preceding claims, **characterized in that** the spur-gear portion (13) with the third planets (24) is designed as a differential or as a Ravigneaux set.

## Revendications

1. Dispositif de transmission (1) pour un véhicule
comprenant une première section d'engrenage à pignons droits (12), la première section d'engrenage à pignons droits (12) présentant une pluralité de premiers satellites (15) d'un premier train planétaire (14), lesquels sont disposés de manière à tourner autour d'un axe de rotation principal (2) du dispositif de transmission (1),
comprenant une deuxième section d'engrenage à pignons droits (13), la deuxième section d'engrenage à pignons droits (13) présentant une pluralité de deuxièmes satellites (17) d'un deuxième train planétaire (16), lesquels sont disposés de manière à tourner autour de l'axe de rotation principal (2) du dispositif de transmission (1),
comprenant une pluralité d'axes de satellites doubles (18), les axes de satellites doubles (18) s'étendant depuis une première section latérale (19) jusqu'à une deuxième section latérale (20) et les axes de satellites doubles (18) portant chacun un premier satellite (15) du premier train planétaire (14) et un deuxième satellite (17) du deuxième train planétaire (16),
comprenant un troisième train planétaire (23) avec des troisième satellites (24), lesquels sont également disposés de manière à tourner autour de l'axe de rotation principal (2) du dispositif de transmission, et
comprenant une pluralité d'axes de support (25), les axes de support (25) portant chacun un troisième satellite (24) du troisième train planétaire (23),
les axes de support (25) s'étendant depuis la première section latérale (19) jusqu'à la deuxième section latérale (20),
comprenant une plaque intermédiaire (21) qui est disposée entre la première et la deuxième section d'engrenage à pignons droits (12, 13), et qui forme, conjointement avec les sections latérales (19, 20), les axes de satellites doubles (18) et les axes de support (25), un porte-satellites (22),
**caractérisé en ce que**
la plaque intermédiaire (21) sépare l'une de l'autre les deux sections d'engrenage à pignons droits (12, 13).

2. Dispositif de transmission (1) selon la revendication 1, **caractérisé en ce qu'**au moins l'une des sections latérales (19, 20) est réalisée sous forme de section d'une pièce façonnée.

3. Dispositif de transmission (1) selon la revendication 2, **caractérisé en ce que** la pièce façonnée est réalisée sous forme de pièce en forme de coiffe.

4. Dispositif de transmission (1) selon l'une quelconque des revendications précédentes, **caractérisé en ce que** les axes de satellites doubles (18) et/ou les axes de support (25) présentent un épaulement de butée contre lequel s'applique la plaque intermédiaire (21) par engagement par correspondance de forme dans la direction axiale.

5. Dispositif de transmission (1) selon l'une quelconque des revendications précédentes, **caractérisé en ce que** le porte-satellites (22) est réalisé avec les sections d'engrenage à pignons droits (12, 13) sous forme de module autorétentif.

6. Dispositif de transmission (1) selon l'une quelconque des revendications précédentes, **caractérisé en ce que** les axes de satellites doubles (18) et/ou les axes de support (25) présentent des guides pour lubrifiant (26) s'étendant axialement.

7. Dispositif de transmission (1) selon la revendication 6, **caractérisé en ce que** les guides pour lubrifiant (26) sont réalisés pour lubrifier les supports sur palier des satellites (15, 17, 24) et/ou pour le passage axial de lubrifiant.

8. Dispositif de transmission (1) selon l'une quelconque des revendications 6 ou 7, **caractérisé en ce que** le guide pour lubrifiant (26) passe à travers l'une des sections d'engrenage à pignons droits (12, 13) jusqu'aux troisièmes satellites (24) dans l'autre section d'engrenage à pignons droits (13, 12).

9. Dispositif de transmission (1) selon l'une quelconque des revendications précédentes, **caractérisé en ce que** la section d'engrenage à pignons droits (13) est réalisée avec les troisièmes satellites (24) sous forme de différentiel ou sous forme de train de Ravigneaux.
